# EUROPEAN PATENT SPECIFICATION

(11) **EP 0 439 303 B1**
(45) Date of publication and mention of the grant of the patent: **13.07.1994**
(21) Application number: 91300426.3
(22) Date of filing: 18.01.1991
(51) Int. Cl.: B60T 8/36, B60T 11/34

(54) **Fluid pressure modulator valves**
Druckregelventile
Soupapes régulatrices de pression

(30) Priority: 20.01.1990 GB 9001373
(43) Date of publication of application: 31.07.1991
(73) Proprietor: AlliedSignal Limited, Kingswood, Bristol BS15 2NL (GB)
(72) Inventor: Hallett, Roger Charles, Tetbury, Gloucester (GB)
(74) Representative: Turner, Alan Reginald

(56) References cited:
- EP-A- 0 060 545
- EP-A- 0 147 585
- EP-A- 0 154 214

## Description

This invention relates to fluid pressure modulator valves and relates especially but not exclusively to an air pressure modulator valve for modifying air pressure to one or more brake actuators in a compressed air braking system.

Present and future compressed air braking systems of heavy road vehicles are increasingly to be fitted with anti-lock systems which sense deceleration rates of individually braked wheels and modify the applied brake pressures in order to prevent wheel locking under low adhesion conditions. The brake pressures are typically modified by electrically operable modulator valves which are capable of holding, decreasing or restoring applied pressures in accordance with the performance of respective wheels.

One such modulator valve which has already been proposed comprises a housing provided with a fluid pressure input port a fluid pressure delivery port and a vent port and includes a first fluid pressure pilot signal responsive diaphragm valve operable to close a communication between the input port and the delivery port, a second pressure pilot signal responsive valve being operable to connect the delivery port to the vent port. The pressure pilot signals to said first and second valves are applied by respective first and second electromagnetically operable pilot valves which derive input pressure directly from the input port. Electrical energisation of the first pilot valve may provide a delivered pressure "hold" whereas energisation of both pilot valves may enable the delivered pressure to be exhausted. It is fundamental for safe operation, with both pilot valves not electrically energised, that the input port needs to be connected with certainty to the delivery port to ensure that normal brakes are applied. However in the modulator valve described above the first pilot valve may present an output valve seat area to input port pressure. This pressure creates a force on the armature which is normally opposed by a return spring but there is an albeit low probability that with an appreciably higher than normal input pressure the armature of the pilot valve could be self-holding and thereby result in a spuriously maintained control pressure to the respective diaphragm valve to cause the latter to remain in its "hold" condition. No delivered pressure rise would then occur and brake "failure" may result.

In the Specification of European Patent No. 0 147 585 a brake pressure modulator valve arrangement is described in which a bypass path is provided between an input pressure port and a delivery pressure port. This would have the result that fluid under pressure can flow to the delivery port regardless of the state of the valve but such a continuous flow path can be wasteful of compressed air.

The object of the present invention is to reduce the probability of a brake failure and also minimise the loss of compressed air in modulator valves of the above type.

According to the present invention there is provided a fluid pressure modulator valve comprising a housing having a fluid pressure input port a fluid pressure delivery port and a vent port first and second pilot pressure operable valves for respectively disconnecting said delivery port from said input port and said vent port, said first and second valves being operable by pilot pressure derivable from a supply pressure via respective first and second pilot valves and characterised by an additional fluid flow path between the pilot pressure output of the second pilot valve and said delivery port ensuring a pressure rise at said delivery port despite the presence of spurious control pressure holding said first pressure operable valve closed.

In a preferred embodiment of the invention the restricted fluid flow path is arranged to be closed for normal supply pressures below a predetermined magnitude.

Again, the alternative restricted fluid flow path may be arranged to be downstream of the pilot pressure control valve of the second said valve whereby said alternative path is operative only when the delivery port is disconnected from the vent port.

In order that the invention may be more clearly understood and readily carried into effect the same will now be further described by way of example with reference to the accompanying drawings of which:-
Fig. 1 illustrates a schematic sectional view of a modulator valve in accordance with one embodiment
   and
Fig. 2 illustrates a fragmental view of a modification of the valve of Fig. 1.

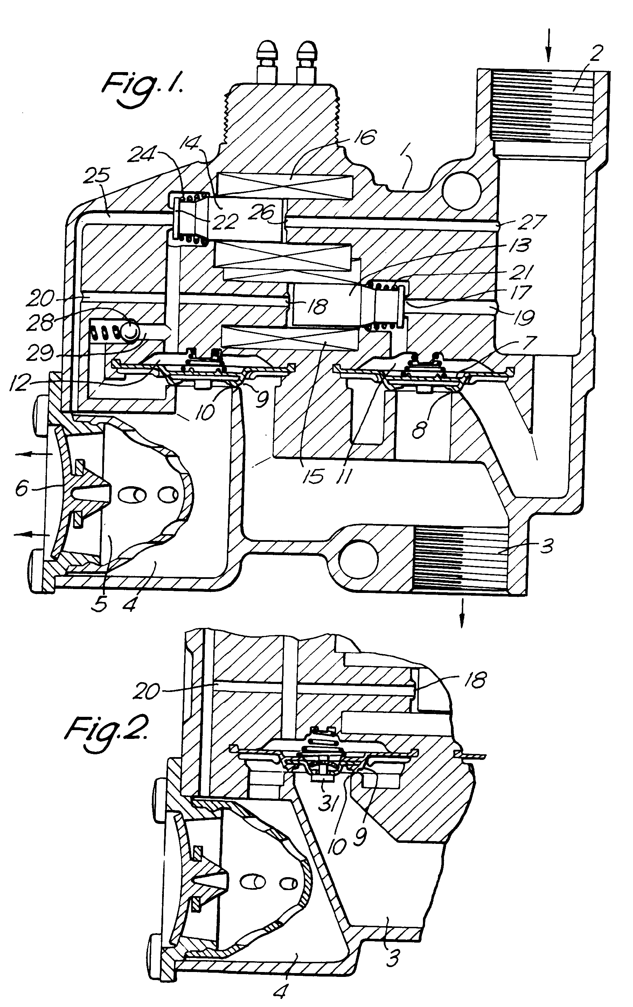

Referring to Fig. 1 of the drawings, the modulator valve, which is shown therein in schematic sectional manner, comprises a housing 1 having an input port 2, a delivery port 3 and a vent port 4 covered by suitable dirt exclusion device 5 with a flexible rubber outflow disc 6. Mounted within the housing and being operable in response to a control pressure a first lightly spring loaded diaphragm valve element 7 is engageable with a valve seat 8 to close off the communication between the input port 2 and the delivery port 3. A second, similar diaphragm valve has a valve element 9 engageable with a valve seat 10 to close off a communication between the delivery port 3 and the vent port 4.

The two diaphragm valves are respectively controllable by the application of pressure signals from the input port to regions 11 and 12 above the diaphragms 7 and 9. These pressure signals are selectively applied by way of two-position solenoid pilot valves having respective armatures 13, 14 and energising coils 15, 16. In the unenergised position shown, the armature 13 engages a seat 17 under the effect of a spring 21, thereby closing a passage 19 from port 2 and leaving a seat 18 uncovered permitting the region 11 to be vented via a passage 20. In the unenergised position of the armature 14, it engages a seat 22 under the effect of a spring 24 thereby holding closed the passage 25 to the vent port and leaving uncovered a valve seat 26 in the passage 27 between the input port 2 and the region 12 above diaphragm 9. The connection between the delivery port 3 and the vent port 4 is thereby held closed.

From the foregoing it will be seen that with no energisation of the solenoids 15 and 16 input fluid pressure at port 2 is communicated via valve seat 8 to the delivery port whereas by energising solenoid 15 alone, the armature 13 is switched over to close seat 18 and open seat 17 to apply supply pressure above diaphragm 7 so that delivered pressure increase at 3 is thereby interrupted at a given magnitude in a "hold" condition.

Again, by additionally energising solenoid 16, the armature 14 is switched over to vent the region 12 above diaphragm 9 and the delivered pressure at 3 is vented via valve seat 10 to port 4.

In the valve as described above there is a possibility that after removal of selective energisation of the solenoid 15, the armature 13 could find itself remaining in a position against seat 18, opposite to that shown, such that input pressure is applied to the region 11 above diaphragm 7. Such a state of affairs might arise for example as a result of a substantially higher-than-normal pressure appearing in the passage 19, being of sufficient magnitude to act upon the finite area equal to that of seat 18 to hold the armature 13 against seat 18 in opposition to the action of spring 21. The probability of this occurring is increased if the spring 21 becomes weakened in service. In such circumstances the pressure at port 3 is prevented from increasing towards the pressure at port 2 and a vehicle brake may thereby fail to be appropriately reapplied.

In accordance with the present embodiment of the invention, a biassed check valve 28 is included in a passage 29 between the connection to region 12 above diaphragm 9 and the delivery port. This check valve is such as to open at a pressure somewhat higher than the normal maximum operating pressure at port 3 and permits the pressure at port 3 to increase such that brake failure is prevented although pressure increase will be slower than the normal pressure increase via valve seat 8. Because the path through the check valve from the input port is also via the passage 27 and uncovered valve seat 26 it does not result in undesired venting of input port pressure when the modulator valve is in a venting mode. The solenoid 16, being energised to allow diaphragm 9 to become unseated, closes off the passage for input air via 27 to the check valve passage 29.

In the alternative embodiment illustrated fragmentally in Fig. 2 a biassed check valve 31 is incorporated in the vent diaphragm assembly. To enable this check valve to be concentrically arranged in the central rigid part of the vent valve diaphragm 9 the housing is rearranged such that air flow through the diaphragm valve when unseated is now radially outwards. Otherwise the action is substantially as described with reference to Fig. 1, the biassed check valve permitting flow of compressed air from the input port to the delivery port via associated solonoid valve when the input pressure exceeds a given value. A brake application is thereby similarly assured despite possible spurious closure of diaphragm valve 7 against seat 8.

## Claims

1. A fluid pressure modulator valve comprising a housing (1) having a fluid pressure input port (2), a fluid pressure delivery port (3) and a vent port (4), first and second pilot pressure operable valves (7,8 ; 9,10) for respectively disconnecting said delivery port from said input port and said vent port, said first and second valves being operable by pilot pressures derivable from a supply pressure via respective first and second pilot valves (13,14) and characterised by an additional flow path (29;31) between the pilot pressure output of the second pilot valve and said delivery port ensuring a pressure rise at said delivery port despite the presence of spurious control pressure holding said first valve closed.

2. A fluid pressure modulator valve as claimed in claim 1, characterised in that said independent flow path is a flow path appreciably more restrictive than the flow path via said second valve when open.

3. A fluid pressure modulator valve as claimed in claim 1 or 2 characterised in that said independent flow path is a one-way flow path.

4. A fluid pressure modulator as claimed in claim 1, 2 or 3, characterised in that said independent flow path comprises a bypass path (31) formed in the valve member (9) of said second pilot pressure operable valve.

5. A fluid pressure modulator valve as claimed in claim 3 characterised in that said one-way flow path comprises a biased check valve (29;31) which opens at a pressure higher than a predetermined maximum apparatus pressure.

## Patentansprüche

1. Fluiddruckmodulatorventil, umfassend ein Gehäuse (1), welches eine Fluiddruckeingangsöffnung (2), eine Fluiddruckabgabeöffnung (3) und eine Entlüftungsöffnung (4) hat, erste und zweite durch Pilotdruck betätigbare Ventile (7,8;9,10) zum betreffenden Trennen der Abgabeöffnung von der Eingangsöffnung und der Entlüftungsöffnung, wobei die ersten und zweiten Ventile durch Pilotdrücke betätigbar sind, die von einem Lieferdruck über betreffende erste und zweite Pilotventile (13,14) abgeleitet werden können,
**gekennzeichnet** durch einen zusätzlichen Fließ- oder Strömungsweg (29;31) zwischen dem Pilotdruckausgang des zweiten Pilotventils und der Abgabeöffnung, wodurch ein Druckanstieg an der Abgabeöffnung gewährleistet ist trotz des Vorhandenseins eines falschen Steuerdrucks, der das erste Ventil geschlossen hält.

2. Fluiddruckmodulatorventil nach Anspruch 1, dadurch gekennzeichnet, daß der genannte unabhängige Fließ- oder Strömungsweg ein Fließ- oder Strömungsweg ist, der merkbar begrenzter ist als der Fließ- oder Strömungsweg über das genannte zweite Ventil, wenn dieses offen ist.

3. Fluiddruckmodulatorventil nach Anspruch 1 oder 2, dadurch gekennzeichnet, daß der unabhängige Fließ- oder Strömungsweg ein Einweg-Fließ- oder Strömungsweg ist.

4. Fluiddruckmodulator nach Anspruch 1, 2 oder 3, dadurch gekennzeichnet, daß der unabhängige Fließ- oder Strömungsweg einen Umgehungsweg (31) aufweist, der in dem Ventilglied (9) des zweiten durch Pilotdruck betätigbaren Ventils gebildet ist.

5. Fluiddruckmodulatorventil nach Anspruch 3, dadurch gekennzeichnet, daß der Einweg-Fließ- oder Strömungsweg ein vorgespanntes Rückschlagventil (29;31) aufweist, welches sich bei einem Druck öffnet, der höher als ein vorbestimmter maximaler Vorrichtungsdruck ist.

## Revendications

1. Soupape modulatrice de pression d'un fluide, comprenant un corps de soupape (1) comportant une lumière d'entrée (2) de fluide sous pression, une lumière de sortie (3) de fluide sous pression et une lumière de mise à l'atmosphère (4), un premier et un second clapet (7, 8; 9, 10) actionnés par une pression pilote pour interrompre respectivement la communication entre ladite lumière de sortie (3) de fluide sous pression et la lumière d'entrée (2) et la lumière de mise à l'atmosphère (4), ledit premier et ledit second clapet étant actionnés par des pressions pilotes prises en dérivation sur la pression d'alimentation par l'intermédiaire d'une première et d'une seconde soupape pilote (13, 14), ladite soupape modulatrice étant caractérisée par une voie d'écoulement supplémentaire (29; 31) entre la sortie de la pression pilote de la seconde soupape pilote et la lumière de sortie de fluide sous pression pour assurer une augmentation de pression au niveau de ladite lumière de sortie de fluide sous pression malgré la présence d'une pression de commande parasite maintenant ledit premier clapet en position fermée.

2. Soupape modulatrice de pression de fluide selon la revendication 1, caractérisée par le fait que ladite voie d'écoulement indépendante est une voie d'écoulement dont le diamètre est substantiellement réduit par rapport à la voie d'écoulement passant par le second clapet lorsque celui-ci est ouvert.

3. Soupape modulatrice de pression de fluide selon la revendication 1 ou selon la revendication 2, caractérisée par le fait que la voie d'écoulement indépendante permet une circulation du fluide dans une seule direction.

4. Soupape modulatrice de pression de fluide selon l'une quelconque des revendications 1 à 3, caractérisée par le fait que ladite voie indépendante comprend une voie de dérivation (31) faisant partie de l'élément de soupape (9) dudit second clapet actionné par une pression pilote.

5. Soupape modulatrice de pression de fluide selon la revendication 3, caractérisée par le fait que ladite voie à une seule direction comporte une soupape de retenue préréglée (28; 31) qui s'ouvre à toute pression supérieure à la pression maximale de fonctionnement prédéterminée pour l'appareil.
